# EUROPÄISCHE PATENTSCHRIFT

(11) **EP 0 617 855 B1**
(45) Veröffentlichungstag und Bekanntmachung des Hinweises auf die Patenterteilung: **12.03.1997**
(21) Anmeldenummer: 93917520.4
(22) Anmeldetag: 02.09.1993
(51) Int. Cl.: H02G 15/013, H02G 15/18

(54) **FÜLLSTÜCK ZUR ABDICHTUNG VON KABELN**
FILLER PIECE FOR SEALING CABLES
PIECE DE REMPLISSAGE POUR L'ETANCHEITE DE CABLES

(30) Priorität: 10.09.1992 CH 2853/92
(43) Veröffentlichungstag der Anmeldung: 05.10.1994
(73) Patentinhaber: HUBER & SUHNER AG KABEL-, KAUTSCHUK-, KUNSTSTOFF-WERKE, 9100 Herisau (CH)
(72) Erfinder: MERKEL, Jürgen, CH-9100 Herisau (CH); MENNEN, Heinz, CH-9100 Herisau (CH)
(74) Vertreter: Münch, Otto
(86) Internationale Anmeldenummer: CH9300215
(87) Internationale Veröffentlichungsnummer: WO9406186

(56) Entgegenhaltungen:
- EP-A- 0 057 742
- EP-A- 0 068 780
- EP-A- 0 182 199
- EP-A- 0 439 284
- DE-A- 2 209 629
- DE-A- 2 604 477
- DE-A- 3 148 386
- US-A- 4 350 842

## Beschreibung

Die Erfindung betrifft ein Füllstück zur Abdichtung von Kabeln.

In der DE-OS 31 48 386 wird ein Füllstück beschrieben, das aus einem Profilstück aus plastischem Material und einem Ueberzug aus Schmelzkleber besteht. Als plastisches Material wurden z.B. Thermoplaste verwendet, d.h. ähnliche Materialien, wie sie auch als Kabelisolierungen Verwendung finden. Die Schmelzkleber sind ja derart beschaffen, dass sie auf solchen Materialien gut haften. Der Schmelzkleber schmilzt, wenn um den Verbund aus Füllstück und Kabeln ein Schrumpfschlauch aufgeschrumpft wird.

Es wurde allerdings festgestellt, dass bei den horkömmlichen Füllkörpern die Verbindung und damit die Abdichtung in zentralen Bereichen nicht optimal war. Der vorliegenden Erfindung liegt die Aufgabe zugrunde, diesen Nachteil bekannter Füllstücke zu beseitigen. Diese Aufgabe wird durch die Merkmalskombination gemäss Anspruch 1 gelöst.

Der vorliegenden Erfindung liegt die Erkenntnis zugrunde, dass die mangelhafte Verbindung bei herkömmlichen Füllstücken von einem ungenügenden Aufschmelzen des Schmelzklebers in zentralen Bereichen herrühren könnte. Elastomere haben eine wesentlich bessere Wärmeleitfähigkeit als Thermoplaste. Mit den erfindungsgemässen Füllstücken gemäss Anspruch 1 wird deshalb erreicht, dass während des Aufschrumpfens des Schrumpfschlauches die Wärme rasch auch ins Innere fliesst und eine gleichmässige Temperaturverteilung über den Querschnitt erreicht wird. Dadurch wird der Schmelzkleber auch in zentralen Bereichen aufgeschmolzen und verbindet sich daher gut mit den Kabeln. Es wird damit ein guter, dichter Verbund erreicht.

Elastomere Profilstücke haben zudem den wesentlichen Vorteil, dass die zylindersegmentförmigen Ausnehmungen das Kabel zu mehr als 180 ° umschliessen können. Die Füllstücke können dann auf die betreffenden Kabel aufgeschnappt werden.

In der EP-A-0 068 780 ist im Zusammenhang mit der Ausführungsform nach Figur 14 ein Füllstück beschrieben, mit einem Profilstück bestehend aus einem im Querschnitt kreuzförmigen Kern aus Metall oder Thermoplast. Die vier Arme des Kerns haben an ihren freien Enden Kupplungselemente zum Kuppeln mit einer Umhüllung aus einem Schrumpfschlauch. Die Seiten der Arme sind mit einem Elastomer beschichtet, das kreissektorförmige Ausnehmungen hat. Die Oberfläche der Ausnehmungen ist mit einem Heissschmelzkleber beschichtet.

In einer englischen Zusammenfassung der DE-A-2 604 477 ist eine Kabelmuffe beschrieben bestehend aus zwei gleichen Muffenhälften. Die Muffenhälften haben an beiden Enden halbkreisförmige Trichter, welche bei zusammengesetzter Muffe zum Einführen je eines Kabels dienen. Anschliessend an die Trichter sind halbkreisförmige Nuten ausgebildet, in welche je ein elastomerer Dichtring eingesetzt ist. Durch eine umlaufende Wand ist eine äussere Kammer ausserhalb der beiden Dichtringe und eine innere Kammer für die Spleissstelle gebildet. Beide Kammern können mit Dichtmassen ausgegossen werden.

Elastomere Profilstücke hat man bisher in der Praxis nicht verwendet, weil die bekannten Schmelzkleber an den handelsüblichen Elastomeren bzw. Polymerblends relativ schlecht haften. Die Massnahmen gemäss Ansprüchen 3 und 4 überwinden diese Schwierigkeit.

Nachfolgend werden Ausführungsbeispiele der Erfindung anhand der Zeichnungen erläutert. Darin zeigt:
- Fig. 1: eine perspektivische Ansicht eines Füllstücks,
- Fig. 2: einen Querschnitt durch eine andere Ausführungsform, und
- Fig. 3: einen Querschnitt durch den Profilkörper einer dritten Ausführungsform.

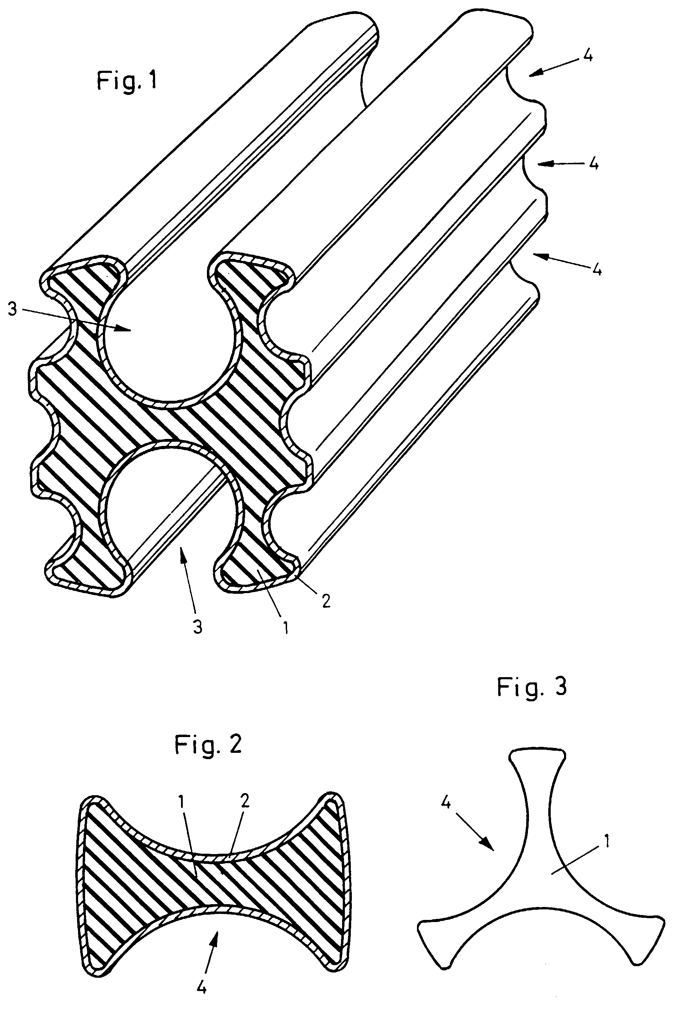

Die dargestellten Füllstücke bestehen aus einem elastomeren Profilstück 1 mit mehreren kreiszylindersektorförmigen Ausnehmungen 3, 4 und einer Ummantelung aus einem Heissschmelzkleber 2. Bei der Ausführungsform nach Fig. 1 umschliessen die Ausnehmungen 3 einen Winkel von mehr als 180°. Die dort einzusetzenden relativ dicken Kabel werden also in die Ausnehmungen 3 eingeschnappt. Das Profilstück 1 besteht vorzugsweise aus SBR/NBR/Polychloropren. Um die Haftung gegenüber dem Schmelzkleber zu verbessern, ist entweder bei der Herstellung des Profilstücks 1 dessen Material ein haftaktivierendes Additiv beigegeben, insbesondere auf der Basis eines anhydrid-modifizierten EVA-Comonomers. Alternativ ist es auch möglich, die Oberfläche des elastomeren Füllstücks 1 mit einem Haftvermittler zu behandeln, z.B. mit einer Halogenisierungsbeize mit Polychloroprenlösung, oder durch eine hydroaromatische Zyklisierung bzw. Polarisierung des Profilstücks 1, die im Rahmen des Heissschmelzkleberverbundes bei einem Aufheizen auf 190° C zur Diffusionsvernetzung mit dem Heissschmelzkleber 2 führt.

Als Schmelzkleber eignen sich heteropolare und Zweikomponenten-Schmelzkleber, insbesondere Polyamid-, EVA-, PU-, Acrylat- sowie Epoxid-Zweikomponenten-Schmelzkleber.

Der Schmelzkleber 2 kann sich auch nur über einen Teil der Länge des Profilstücks 1 erstrecken.

## Patentansprüche

1. Füllstück zur Abdichtung von Kabeln, bestehend aus einem elastomeren Profilstück (1) mit mehreren kreiszylindersektorförmigen Ausnehmungen (3, 4) und einer Ummantelung aus einem Heisssschmelzkleber (2), wobei sich die Ummantelung im Querschnitt über den ganzen Umfang des Profilstücks (1) erstreckt.

2. Füllstück nach Anspruch 1, wobei das elastomere Profilstück aus SBR/NBR/Polychloropren besteht.

3. Füllstück nach Anspruch 1 oder 2, wobei das elastomere Material des Profilstücks ein haftaktivierendes Additiv enthält, insbesondere auf der Basis eines anhydrid-modifizierten EVA-Comonomers.

4. Füllstück nach Anspruch 1 oder 2, wobei die Oberfläche des elastomeren Profilstücks (1) mit einem Haftvermittler behandelt ist.

5. Füllstück nach Anspruch 4, wobei der Haftvermittler eine Halogenisierungsbeize mit einer Polychloroprenlösung ist.

6. Füllstück nach Anspruch 4, wobei die Oberfläche des Profilstücks hydroaromatisch zyklisiert bzw. polarisiert ist, derart, dass bei Erhitzung auf die Schmelztemperatur des Heissschmelzklebers eine Diffusionsvernetzung mit dem Heissschmelzkleber entsteht.

7. Füllstück nach einem der Ansprüche 1 bis 6, wobei sich die Ummantelung nur über einen Teil der Länge des Profilstücks (1) erstreckt.

## Claims

1. Filler piece for sealing cables, comprising an elastomeric profiled piece (1) having a plurality of recesses (3, 4), in the form of circular-cylinder sectors, and a sheathing of a hot-melt adhesive (2), which sheathing in the cross-section extends over the profiled piece's (1) total circumference.

2. Filler piece according to Claim 1, the elastomeric profiled piece consisting of SBR/NBR/polychloroprene.

3. Filler piece according to Claim 1 or 2, the elastomeric material of the profiled piece containing an adhesion-activating additive, in particular based on an anhydride-modified EVA comonomer.

4. Filler piece according to Claim 1 or 2, the surface of the elastomeric profiled piece (1) being treated with an adhesion promoter.

5. Filler piece according to Claim 4, the adhesion promoter being a halogenizing preparation with polychloroprene solution.

6. Filler piece according to Claim 4, the surface of the profiled piece being hydroaromatically cyclized or polarized in such a way that, on heating to the melting temperature of the hot-melt adhesive, a diffusion crosslinking with the hot-melt adhesive occurs.

7. Filler piece according to one of Claims 1 to 6, the sheathing extending only over part of the length of the profiled piece (1).

## Revendications

1. Pièce de remplissage pour l'étanchéité de câbles, constituée par une pièce profilée en élastomère (1) avec plusieurs évidements (3, 4) formant des secteurs annulaires cylindriques et une enveloppe à partir d'une substance adhésive thermofusible (2), l'enveloppe s'étendant dans sa section transversale sur toute la périphérie de la pièce profilée (1).

2. Pièce de remplissage selon la revendication 1, dans laquelle la pièce profilée en élastomère est constituée par du SBR/NBR/Polychloroprène.

3. Pièce de remplissage selon la revendication 1 ou 2, dans laquelle le matériau élastomère de la pièce profilée contient un additif activant l'adhésivité, en particulier à base d'un EVA-comonomères modifiés par anhydride.

4. Pièce de remplissage selon la revendication 1 ou 2, dans laquelle la surface de l'élément profilé en élastomère (1) est traitée au moyen d'un agent conférant l'adhésivité.

5. Pièce de remplissage selon la revendication 4, dans laquelle l'agent conférant l'adhésivité est un agent corrosif d'halogénation avec une solution de polychloroprène.

6. Pièce de remplissage selon la revendication 4, dans laquelle la surface de l'élément profilé est cyclisée ou polarisée par voie hydroaromatique de telle sorte que lors du chauffage à la température de fusion de la substance d'adhésion thermofusible, il se produit une réticulation par diffusion avec la substance adhésive thermofusible.

7. Pièce de remplissage selon l'une des revendications 1 à 6, dans laquelle l'enveloppe ne s'étend que sur une partie de la longueur de l'élément profilé (1).
